# EUROPÄISCHE PATENTSCHRIFT

(11) **EP 0 318 726 B1**
(45) Veröffentlichungstag und Bekanntmachung des Hinweises auf die Patenterteilung: **02.02.1994**
(21) Anmeldenummer: 88118530.0
(22) Anmeldetag: 07.11.1988
(51) Int. Cl.: B25B 27/14

(54) **Werkzeug zum Entfernen des Einbauzapfens eines Drahtgewindeeinsatzes**
Tool for removing the mounting tang of a threaded insert
Outil pour enlever la queue de montage d'un insert fileté

(30) Priorität: 30.11.1987 DE 3740560
(43) Veröffentlichungstag der Anmeldung: 07.06.1989
(73) Patentinhaber: Böllhoff & Co, GmbH & Co KG, D-33649 Bielefeld (DE)
(72) Erfinder: Kobusch, Klaus, D-4800 Bielefeld 1 (DE); Benesch, Miroslav, D-4800 Bielefeld 14 (DE); Dirkschnieder, Klaus, D-4815 Schloss Holte (DE)
(74) Vertreter: Hauck, Hans, Dipl.-Ing.

(56) Entgegenhaltungen:
- US-A- 3 385 380
- US-A- 3 832 772
- US-A- 4 450 736

## Beschreibung

Die Erfindung betrifft ein Werkzeug zum Entfernen des Einbauzapfens eines Drahtgewindeeinsatzes gemäß dem Oberbegriff des Patentanspruchs 1, vgl. US-A-3 385 380.

Derartige Drahtgewindeeinsätze dienen zum Auskleiden von Innengewinden in Teilen, deren Baustoff zu weich ist, um einem Bolzen aus hartem Material genügend Halt zu geben oder wiederholtes Ein- und Ausschrauben ohne Verletzung des Innengewindes zu gestatten. Die Einsätze in Form einer Drahtspule werden gewöhnlich mit größerem Durchmesser hergestellt, als dem Durchmesser des auszukleidenden Innengewindes entspricht, damit sie sich unter eigener Federkraft fest in die Gewindegänge einbetten. Die Einsätze müssen deshalb vor oder während des Einsetzens zusammengezogen, d.h. im Durchmesser verkleinert werden. Hierzu ist es bekannt (DE-PS 10 85 381), das Ende der beim Einsetzen in das Innengewinde führenden Windung der Drahtspule nach innen umzubiegen und so einen Einbauzapfen zu bilden, der von Innen von einem vom anderen Ende der Drahtspule her eingebrachten geschlitzten, stabförmigen Werkzeug erfaßt wird. Das von dem Werkzeug ausgeübte Drehmoment bewirkt ein Zusammenziehen der führenden Windungen der Drahtspule, die so in das Innengewinde eingeschraubt wird.

Soll in den Gewindeeinsatz ein durchgehender Bolzen eingeschraubt werden, so muß der Einbauzapfen entfernt werden. Um das Abbrechen des Einbauzapfens zu erleichtern, ist am Ende der führenden Windung eine Sollbruchstelle in Form einer Kerbe vorgesehen.

Der Erfindung liegt die Aufgabe zugrunde, ein Werkzeug zum Abbrechen und Entfernen des Einbauzapfens insbesondere aus Sackbohrungen so auszubilden, daß die Einbauzapfen schnellstmöglich und zuverlässig entfernt werden.

Die genannte Aufgabe ist erfindungsgemäß durch die im kennzeichnenden Teil des Patentanspruchs 1 angeführten Merkmale gelöst.

Vorteilhafte Weiterbildungen der Erfindung sind in den Unteransprüchen gekennzeichnet.

Erfindungsgemäß wird der mittels der Stirnfläche des Rohres abgeschlagene Einbauzapfen von einem Luftstrom durch das in die eingeschraubte Drahtspule eingeführtes Rohr abgesaugt. Der Luftstrom tritt durch einen Ringspalt zwischen dem Außenumfang des Rohres und dem Innenumfang des Gewindeeinsatzes in die Grundbohrung ein, wird am Boden der Grundbohrung umgelenkt und strömt durch das Rohrinnere nach außen, wobei der Zapfen sicher mitgenommen wird. Vorzugsweise kann das in den Einsatz eingetauchte Rohr einen Querschnitt aufweisen, der es erlaubt, möglichst viel Druckluft in kurzer Zeit zuzuführen. So kann insbesondere der Außenumfang des Rohres eine von einem Kreis abweichende Gestalt haben, um den Zuflußquerschnitt für die Druckluft zu vergrößern. Insbesondere kann die Außenseite des Rohres mit axialen Nuten versehen sein oder mehrfach abgeflacht sein. Die Innenwandung des Rohres ist vorzugsweise kreisförmig, um das Absaugen des Zapfens zu erleichtern. Hierzu soll der Einbauzapfen eine möglichst kurze Länge aufweisen.

Die zum Absaugen erforderliche Druckluft dient auch zur Betätigung des Werkzeuges für das Abschlagen des Zapfens. Hierzu wird von der Druckluft zunächst ein Kolben betätigt, der die Schlagwirkung auslöst, worauf ein Weg für die Druckluft freigegeben wird, um diese in die Grundbohrung zu führen. Auf diese Weise wird die Arbeitsgeschwindigkeit des Werkzeuges wesentlich erhöht.

Ein Ausführungsbeispiel der Erfindung ist nachstehend anhand der Zeichnung näher erläutert. Es zeigt:
- Figur 1: einen Axialschnitt durch ein Ausführungsbeispiel des Werkzeuges und
- Figur 2: einen Schnitt längs der Linie 2-2 in Figur 1,
- Figur 3: eine Draufsicht auf das führende Ende des Drahtgewindeeinsatzes mit Einbauzapfen.

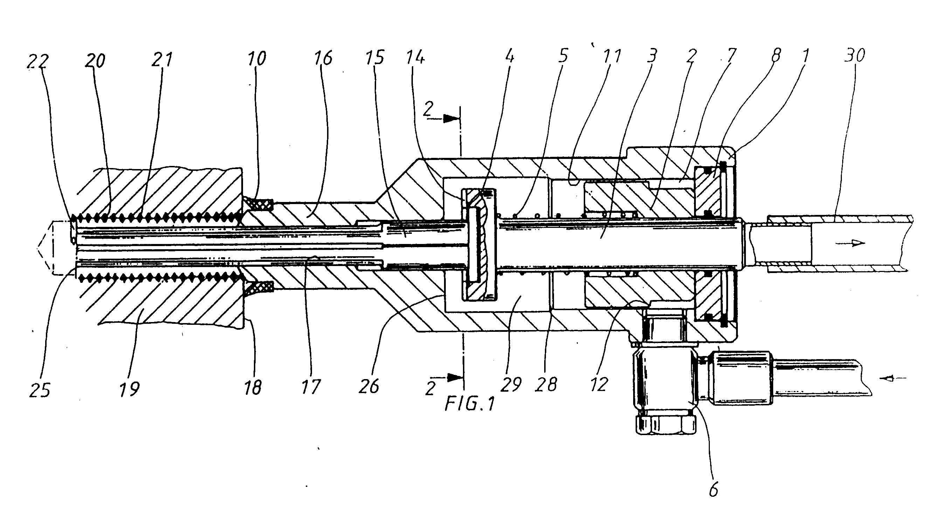

In Figur 1 besteht das Werkzeug aus einem Gehäuse 1, einem Kolben 2, einem Rohr 3, einem auf dem Rohr befestigten Flansch 4, einer zwischen dem Flansch 4 und dem Kolben 2 angeordneten Feder 5, einem Druckluftanschluß 6 für einen Zylinderraum 7, einen den Zylinderraum 7 abschließenden, mit dem Gehäuse 1 dichtend und lösbar verbundenen Deckel 8 und einer Gummimuffe 10 an der vorderen Stirnseite des Gehäuses 1.

Der Ringkolben 2 ist auf dem Rohr 3 verschiebbar geführt und gleitet in der Bohrung 11 des Gehäuses 1. Der Ringkolben 2 weist eine Schulter 12 auf.

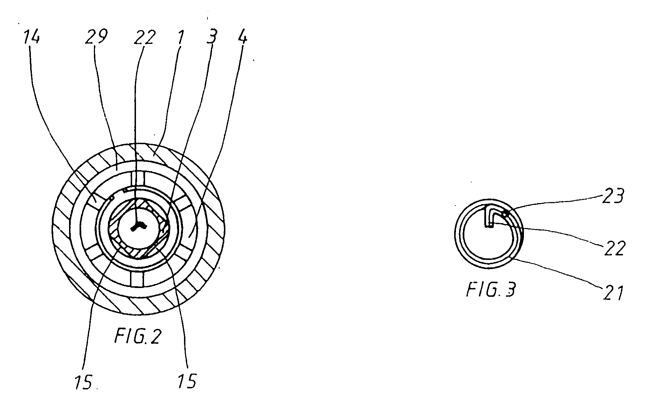

Der Flansch 4 ist auf dem Rohr 3 befestigt und ist auf seiner dem Ringkolben 2 abgekehrten Seite mit radialen Nuten 14 versehen. Diese Nuten 14 münden an ihrem radial inneren Ende in insbesondere aus Figur 2 ersichtliche Abflachungen 15 des Rohres 3. Das Rohr 3 ist im Bereich des vorderen Endes 16 des Gehäuses 1 in der Bohrung 17 geführt.

Mit einer Gummimuffe 10 wird das Werkzeug abdichtend auf die Oberfläche 18 eines Werkstückes 19 aufgesetzt, in dessen Innenbohrung 20 ein Drahtgewindeeinsatz 21 eingesetzt ist. Das beim Einführen führende Ende des Drahtgewindeeinsatzes 21 ist gemäß Figur 3 abgebogen und bildet einen Einbauzapfen 22, der möglichst kurz ist und bereits in einem Abstand von der Mittelachse des Einsatzes endet. Eine Sollbruchstelle in Form einer Kerbe 23 ist vorgesehen, um das Abbrechen des Einbauzapfens 22 zu erleichtern. Die vordere Stirnkante 25 des Rohres 3 dient zum Abschlagen des Einbauzapfens.

Die Wirkungsweise ist wie folgt: Das Werkzeug wird auf das Werkstück 19 aufgesetzt, wobei die Gummimuffe 10 eine Abdichtung bewirkt. Das Rohr 3 ist gegenüber dem Gehäuse 1 frei verschiebbar, und wird von der Feder 5 nach vorne gedrückt und gelangt in Anlage an den Einbauzapfen 22. Hierauf wird Druckluft über den Anschluß 6 in die Kammer 7 geführt. Der Ringkolben 2 wird beschleunigt und schlägt mit hoher Geschwindigkeit auf den Flansch 4, der so mit dem Rohr 3 zusammen einen axialen Vorschub mit hoher Geschwindigkeit erhält, wodurch von der Stirnkante 25 des Rohres 3 der Zapfen 22 abgeschlagen wird. Diese Bewegung ist beendet, sobald der Flansch 4 in Anlage an die Stirnwand 26 des Gehäuses gelangt ist.

Sobald der Ringkolben 2 mit seiner Schulter 12 den Absatz 28 im Gehäuse 1 überfährt, kann die Druckluft aus der Kammer 7 in den Raum 29 übertreten und gelangt über die radialen Nuten 14 im Flansch 4 auf die Außenseite des Rohres 3 und über die in axialer Richtung verlaufenden Abflachungen 15 des Rohres aus dem vorderen Ende 16 des Gehäuses aus. Darauf tritt der Luftstrom in den Ringspalt zwischen dem Gewindeeinsatz 21 und der Außenseite des Rohres 3 ein, wird am Ende der Bohrung umgelenkt und wird unter Mitnahme des abgeschlagenen Zapfens 22 durch das Innere des Rohres 3 nach außen geblasen. An dem Ende des Rohres 3 kann beispielsweise ein Schlauch 30 zum Entsorgen der abgeschlagenen Zapfen angeschlossen sein.

Durch einen kurzzeitigen Druckluftstoß wird somit der Kolben 2 betätigt und der abgeschlagene Zapfen ausgeblasen. Anschließend kehrt der Kolben 2 mittels der Feder 5 wieder in die dargestellte Ausgangslage zurück. Die Länge des Rohres 3 zwischen dem Flansch 4 und dem abzuschlagenden Zapfen muß so gewählt sein, daß der Hub des Rohres ausreicht, den Zapfen sicher abzuschlagen.

## Patentansprüche

1. Werkzeug zum Entfernen des Einbauzapfens (22) eines Drahtgewindeeinsatzes (21) durch eine axial in den Drahtgewindeeinsatz einführbare Stange, die in einer Axialbohrung eines Gehäuses gelagert ist und deren Stirnfläche in Anlage an den Einbauzapfen bringbar ist, wobei der Einbauzapfen (22) mittels eines Mechanismus durch eine schlagartige Betätigung der Stange abtrennbar ist, dadurch gekennzeichnet, daß die Stange rohrförmig ausgebildet ist und daß das Werkzeug Mittel zum Einführen eines Luftstromes durch einen Ringspalt zwischen dem Rohr (3) und dem Drahtgewindeeinsatz (21) aufweist, wobei der abgetrennte Einbauzapfen durch das Rohr aus dem Grundlochbereich entfernbar ist.

2. Werkzeug nach Anspruch 1, dadurch **gekennzeichnet,** daß das Rohr (3) in einer Bohrung (17) eines Gehäuses (1) geführt ist, das an dem Austrittsende des Rohres mit einer Dichtmuffe (10) versehen ist.

3. Werkzeug nach Anspruch 1 oder 2, dadurch **gekennzeichnet,** daß zwischen der Bohrung (17) und dem Außendurchmesser des Rohres (3) axiale Durchtrittskanäle für den Luftstrom vorgesehen sind.

4. Werkzeug nach einem der Ansprüche 1 bis 3, dadurch **gekennzeichnet,** daß das Gehäuse (1) als Zylinder ausgebildet ist und das Rohr (3) einen Flansch (4) aufweist, der zum Abschlagen des Einbauzapfens von einem Kolben (2) verschiebbar ist.

5. Werkzeug nach Anspruch 4, dadurch **gekennzeichnet,** daß der Kolben (2) ein Ringkolben ist, der auf dem Rohr (3) verschiebbar ist.

6. Werkzeug nach Anspruch 4 oder 5, dadurch **gekennzeichnet,** daß der Kolben druckluftbetätigt ist.

7. Werkzeug nach einem der Ansprüche 4 bis 6, dadurch **gekennzeichnet,** daß zwischen dem Ringkolben (2) und dem Flansch (4) ein Abstand als Beschleunigungsweg vorgesehen ist.

8. Werkzeug nach einem der Ansprüche 3 bis 7, dadurch **gekennzeichnet,** daß nach Ausführen der Schlagbewegung des Rohres (3) der Luftstrom aus dem den Kolben (2) aufnehmenden Zylinder (1) am Kolben vorbei in axiale Durchtrittskanäle und in den Ringspalt gelangt.

9. Werkzeug nach einem der Ansprüche 3 bis 8, dadurch **gekennzeichnet,** daß die Endstellung des Rohres (3) durch den am Gehäuse in Anlage geratenen Flansch (4) des Rohres bestimmt ist.

10. Werkzeug nach Anspruch 9, dadurch **gekennzeichnet,** daß der Flansch Nuten (14) für den Durchtritt des Luftstroms aufweist.

11. Werkzeug nach einem der Ansprüche 1 bis 10, dadurch **gekennzeichnet,** daß die Durchtrittskanäle zwischen dem Rohr (3) und dem Gehäuse als Abflachungen des Rohres (3) ausgebildet sind.

12. Werkzeug nach einem der Ansprüche 3 bis 11, dadurch **gekennzeichnet,** daß zwischen Ringkolben (2) und dem Flansch (4) eine Feder (5) eingesetzt ist.

13. Werkzeug nach einem der Ansprüche 1 bis 12, dadurch gekennzeichnet, daß der Einbauzapfen (22) des Drahtgewindeeinsatzes (21) wesentlich kürzer als der Innendurchmesser des Rohrs (3) ist.

## Claims

1. A tool for removing the tang (22) of a coiled wire insert (21) by means of a rod to be axially moved into said coiled wire insert, which rod is supported in an axial bore of a casing and said rod having a front face to be brought into contact with said tang, wherein said tang (22) is broken off by an impact-like actuation of the rod provided by a mechanism, characterized in that the rod is formed tubular and that the tool comprises means for introducing an air stream through an annular gap between the tube (3) and the coiled wire insert (21), wherein the tang broken off is removed through the tube from the ground bore area.

2. The tool of claim 1, characterized in that the tube (3) is guided in a bore (17) of a casing (1) which is provided with a sealing bushing (10) at the outlet end of the tube.

3. The tool of claim 1 or 2, characterized in that axial passages for the air stream are provided between the bore (17) and the outer diameter of the tube (3).

4. The tool of one of claims 1 to 3, characterized in that the casing (1) is formed as a cylinder and that the tube (3) includes a flange (4) which is movable by a piston (2) for breaking off the tang.

5. The tool of claim 4, characterized in that the piston (4) is an annular piston which is movable along the tube (3).

6. The tool of claim 4 or 5, characterized in that the piston is pneumatically actuated.

7. The tool of one of claims 4 to 6, characterized in that a distance defining an acceleration path is provided between the annular piston (2) and the flange (4).

8. The tool of one of claims 3 to 7, characterized in that the air stream flows from the cylinder (1) receiving the piston (2) past the piston into axial passages and into the annular gap after the impact motion of the tube (3) has been terminated.

9. The tool of one of claims 3 to 8, characterized in that the end position of the tube (3) is determined by the flange (4) of the tube brought into contact with the casing.

10. The tool of claim 9, characterized in that the flange includes grooves (14) for passing the air stream.

11. The tool of one of claims 1 to 10, characterized in that the passages between the tube (3) and the casing are formed by flats of the tube (3).

12. The tool of one of claims 3 to 11, characterized in that a spring (5) is provided between the annular piston (2) and the flange (4).

13. The tool of one of claims 1 to 12, characterized in that the tang (22) of the coiled wire insert (21) is substantially shorter than the inner diameter of the tube (3).

## Revendications

1. Outil pour enlever l'embout de montage (22) d'un insert de filetage métallique (21), au moyen d'une tige qui peut être introduite axialement dans l'insert de filetage, qui est montée dans un perçage axial d'un boîtier et dont la face frontale peut être amenée en application contre l'embout de montage, l'embout de montage (22) pouvant, à l'aide d'un mécanisme, être détaché par un brusque actionnement de la tige, caractérisé en ce que la tige est tubulaire et en ce que l'outil présente des moyens pour introduire un flux d'air dans une fente annulaire entre le tube (3) et l'insert de filetage métallique (21), l'embout de montage détaché pouvant être enlevé de la région du trou borgne en étant entraîné dans le tube.

2. Outil selon la revendication 1, caractérisé en ce que le tube (3) est guidé dans un perçage (17) d'un boîtier (1) qui est pourvu d'un manchon d'étanchéité (10) à l'extrémité de sortie du tube.

3. Outil selon la revendication 1 ou 2, caractérisé en ce que des canaux de passage axiaux pour le flux d'air sont prévus entre le perçage (17) et le diamètre extérieur du tube (3).

4. Outil selon l'une quelconque des revendications 1 à 3, caractérisé en ce que le boîtier (1) est cylindrique et le tube (3) présente un flasque (4), qui peut être déplacé par un piston (2) afin de détacher par à-coup l'embout de montage.

5. Outil selon la revendication 4, caractérisé en ce que le piston (2) est un piston annulaire qui est mobile en translation sur le tube (3).

6. Outil selon la revendication 4 ou 5, caractérisé en ce que le piston est actionné par de l'air comprimé.

7. Outil selon l'une quelconque des revendications 4 à 6, caractérisé en ce qu'une distance est prévue comme parcours d'accélération entre le piston annulaire (2) et le flasque (4).

8. Outil selon l'une quelconque des revendications 3 à 7, caractérisé en ce qu'une fois accomplie la course de choc du tube (3), le flux d'air, sortant du cylindre (1) recevant le piston (2) longe celui-ci, dans des canaux de passage axiaux et parvient à la fente annulaire.

9. Outil selon l'une quelconque des revendications 3 à 8, caractérisé en ce que la position finale du tube (3) est déterminée par l'entrée en application du flasque (4) du tube contre le boîtier.

10. Outil selon la revendication 9, caractérisé en ce que le flasque présente des rainures (14) pour le passage du flux d'air.

11. Outil selon l'une quelconque des revendications 1 à 10, caractérisé en ce que les canaux de passage entre le tube (3) et le boîtier sont réalisés sous la forme de méplats du tube (3).

12. Outil selon l'une quelconque des revendications 3 à 11, caractérisé en ce qu'un ressort (5) est monté entre le piston annulaire (2) et le flasque (4).

13. Outil selon l'une quelconque des revendications 1 à 12, caractérisé en ce que l'embout de montage (22) de l'insert de filetage métallique (21) est d'une longueur nettement inférieure au diamètre intérieur du tube (3).
